# EUROPÄISCHE PATENTSCHRIFT

(11) **EP 0 623 083 B1**
(45) Veröffentlichungstag und Bekanntmachung des Hinweises auf die Patenterteilung: **03.04.1996**
(21) Anmeldenummer: 93903885.7
(22) Anmeldetag: 28.01.1993
(51) Int. Cl.: B62D 55/02, B62D 49/06, B62D 55/116, B62D 61/12, B62D 61/10

(54) **FAHRGESTELL FÜR NUTZFAHRZEUG**
CHASSIS FOR A UTILITY VEHICLE
CHASSIS POUR VEHICULE UTILITAIRE

(30) Priorität: 28.01.1992 DE 4202298
(43) Veröffentlichungstag der Anmeldung: 09.11.1994
(73) Patentinhaber: HERWIG, Adolf, D-37603 holzminden 2 (DE)
(72) Erfinder: HERWIG, Adolf, D-37603 holzminden 2 (DE)
(74) Vertreter: Grättinger & Partner
(86) Internationale Anmeldenummer: EP9300188
(87) Internationale Veröffentlichungsnummer: WO9314967

(56) Entgegenhaltungen:
- DE-A- 2 352 907
- DE-B- 1 275 478
- FR-A- 2 122 273
- US-A- 4 941 539

## Beschreibung

Die vorliegende Erfindung betrifft ein Fahrgestell für ein Nutzfahrzeug, insbesondere für land- oder forstwirtschaftliche Zwecke, umfassend einen Vorderrahmen und einen mit diesem über ein Gelenk mit vertikaler Schwenkachse verbundenen Hinterrahmen, wobei am vorderrahmen und am Hinterrahmen seitlich jeweils zwei unabhängig voneinander heb- und senkbare Radeinheiten und im wesentlichen mittig jeweils eine Trageinheit vorgesehen sind, wobei die Trageinheiten Tragelemente umfassen, die jeweils über eine mit Stollen besetzte Endlosfläche verfügen.

Ein gattungsgemäßes Fahrgestell ist aus der DE-OS 21 01 989 bekannt. Bei dem bekannten Fahrgestell werden die Tragelemente der mittig am Vorder- und am Hinterrahmen angeordneten Trageinheiten dadurch in Bodenkontakt gebracht, daß die seitlich angeordneten Radeinheiten relativ zum Rahmen angehoben werden. Um die Tragelemente in Bodenkontakt zu bringen, werden somit der Vorder- und der Hinterrahmen abgesenkt. Dies führt zu einer relativ geringen Bodenfreiheit gerade dann, wenn zur Befahrung von unwegsamen Gelände eine besonders hohe Bodenfreiheit erstrebenswert wäre.

Desweiteren sind Nutzfahrzeuge in vielfältigen Ausgestaltungen bekannt und im Einsatz, die über keine mittig am Vorder- und am Hinterrahmen vorgesehenen Trageinheiten verfügen. Bei ihnen ist im allgemeinen auf dem Vorderrahmen ein Vorderfahrzeug und auf dem Hinterrahmen ein Hinterfahrzeug aufgebaut. In der Forstwirtschaft werden sie z.B. im Rahmen der Holzernte eingesetzt. Je nachdem, ob sie mit einem - an einem Ausleger angeordneten - Holzerntekopf oder mit einem Holztransportaufbau versehen sind, werden sie dann als "Harvester" oder "Forwarder" bezeichnet. Harvester des genannten Aufbaus sind beispielweise das Modell FMG 746/250 *ÖSA SuperEva"* der *Rauma-Repola* FMG *AB,* Alfta, Schweden sowie das Modell *"ROTINE RAPID SNOKEN-RP"* der *Rottne Industrie AB*, Rottne, Schweden; bekannte Forwarder des genannten Aufbaus sind beispielsweise das Modell *"FMG 250 ÖSA"* und das Modell *"ROTINE SMV RAPID RÜCKEZUG"* der jeweiligen oben bezeichneten Firma.

Die durch das hohe Gewicht dieser Nutzfahrzeuge verursachte Bodenverdichtung stellt ein beträchtliches, ernstzunehmendes Problem dar. Zwar werden die bekannten Nutzfahrzeuge im allgemeinen mit groß dimensionierten Niederdruckreifen ausgerüstet, damit die durch die Radeinheiten auf den Boden ausgeübte Flächenpressung möglichst gering ist. Trotzdem lassen sich im Boden als solchem mechanische Veränderungen feststellen, nachdem er mit einem ein bekanntes Fahrgestell aufweisenden Nutzfahrzeug befahren worden ist; und häufig zeigen in der Nähe der Fahrspur wachsende Pflanzen Symptome, die auf eine Schädigung der Wurzeln hindeuten. Derartige Schadsymptome sind beispielsweise an Bäumen zu beobachten, die unmittelbar an den von Holzerntefahrzeugen befahrenen Arbeitsgassen stehen, deren Wurzeln sich somit bis unterhalb der Arbeitsgasse erstrecken. Die häufig propagierte und angewandte Maßnahme, die Arbeitsgassen mit Schlagreisig abzudecken, um die Flächenpressung zu verringern, schafft, je nach Bodenverhältnissen und Dicke der Reisigauflage, nur wenig oder gar keine Abhilfe; sie ist zudem zeitaufwendig, kostenintensiv und dem Naturhaushalt abträglich.

Ein mit einem herkömmlichen Fahrgestell ausgestatteter Geräteträger ist auch aus der DE-OS 24 34 556 bekannt. Jede Radachse des aus dieser Druckschrift bekannten Geräteträgers besitzt eine oder mehrere radial in eine Richtung weisende schwingenförmige Verlängerungen. Der Abstand der Radachsen zueinander läßt sich durch ein die Verlängerungen miteinander verbindendes längenveränderliches Stellglied verändern, um die Bereifung auf Gleisketten umrüsten zu können.

Aus der DE-PS 413 630 ist ein Anhängewagen bekannt, der mittig zwischen den Laufrädern eine Laufkette besitzt. Diese ist fest in das Fahrgestell integriert. Soll der Anhänger durch unwegsames Gelände gezogen werden, werden die Laufräder von der Achse abgenommen und auf oberhalb der Achse angeordnete Achsstummel aufgesteckt. Hierdurch liegt der Anhänger mit der Laufkette auf dem Boden auf.

Der vorliegenden Erfindung liegt die Aufgabe zugrunde, ein gattungsgemäßes Fahrgestell für ein auch in unwegsamem und/oder geneigtem Gelände einsetzbares Nutzfahrzeug zu schaffen, bei dessen Einsatz der überfahrene land- bzw. forstwirtschaftliche Nutzboden möglichst weitgehend in seiner natürlichen Fruchtbarkeit und Nachhaltigkeit geschont wird. Insbesondere sollen Wurzeln von den Arbeitsgassen benachbart wachsenden Pflanzen auch durch deren mehrfaches Befahren nicht geschädigt werden.

Diese Aufgabe wird nach der Erfindung dadurch gelöst, daß jede Trageinheit eine Hubeinrichtung, mittels derer das jeweilige Tragelement anheb- und in eine Stellung, in der die Endlosfläche auf dem Boden abrollt, absenkbar ist, umfaßt, wobei die beiden Hubeinrichtungen so dimensioniert sind, daß sie zusammen mindestens die Hälfte des Gesamtgewichts des Fahrzeuges zu tragen vermögen.

Die erfindungsgemäße Fahrgestellgestaltung gestattet es somit, daß - für den Einsatz auf land- bzw. forstwirtschaftlichem Nutzboden - die dem Gewicht des Fahrzeuges entsprechende Last weitgehend mittig unter dem Fahrzeug auf den Boden aufgebracht wird; die beiden, an jedem Teilfahrzeug seitlich angeordneten Radeinheiten dienen bei diesem Einsatz im wesentlichen lediglich der Abstützung, d.h. der Ausbalancierung des Fahrzeuges.

Hierdurch können die Aufstandskräfte, die in dem belasteten Boden Wurzeln schädigende Druck- und Scherspannungen verursachen, in den von den Radeinheiten überrollten Bereichen, und somit in den Bereichen, in welche die Wurzeln der Randbepflanzung hineinragen, gegenüber herkömmliche Fahrgestelle aufweisenden Fahrzeugen gleichen Gewichts beträchtlich reduziert werden. Die Stollen sorgen dabei dafür, daß die Last nicht von dem empfindlichen, einen geringen Eindringwiderstand besitzenden Oberboden getragen werden muß; denn sie durchdringen im Regelfall - außer bei extremer Trockenheit oder gefrorenem Boden - den Oberboden und bringen die Last des Fahrzeuges auf den vergleichsweise unempfindlichen, weitgehend mineralischen, einen hohen Eindringwiderstand (Lagerungsdichte) besitzenden Unterboden auf. Großflächige, zusammenhängende Bereiche, in denen auf den insbesondere stark mit Feinwurzeln durchsetzten Oberboden schädliche Lasten aufgebracht werden, werden bei Fahrzeugen mit dem erfindungsgemäßen Fahrgestell vermieden. Das punktuelle Durchdringen des Oberbodens durch die Stollen ist für die in dieser Schicht vorhandene Bewurzelung weit weniger schädlich als die flächig-zusammenhängende Belastung, wie sie in den Fahrspuren herkömmlicher Fahrzeuge, bei denen das gesamte Fahrzeuggewicht von den Radeinheiten getragen wird, auftritt. Denn gerade die flächig-zusammenhängende Belastung des Oberbodens verursacht in besonderem Maße Feinwurzeln zerstörende Scherspannungen im überrollten Boden und führt durch die Verdichtung in diesem Horizont zu Störungen des Gas- und Wasseraustausches.

Bei Fahrten auf Wegen und Straßen befinden sich die beiden Tragelemente jeweils in ihrer angehobenen Stellung. Die Last des Fahrzeuges ruht bei der Straßenfahrt ausschließlich auf den Radeinheiten, so daß das erfindungsgemäße Fahrzeug sich bei Straßenfahrt ähnlich verhält wie mit herkömmlichen gattungsgemäßen Fahrgestellen ausgerüstete Fahrzeuge.

Indem die Tragelemente, wie die Radeinheiten, unabhängig voneinander anheb- und absenkbar sind, läßt sich deren Stellung beim Betrieb in unebenem Gelände an dieses anpassen; d.h. die Hubeinrichtungen der Radeinheiten und der Tragelemente können so gesteuert werden, daß das Fahrzeug horizontal ausgerichtet ist. Dies ist beispielsweise von großem Vorteil, wenn ein Kran auf dem Fahrzeug aufgebaut ist, denn nur bei einer horizontalen Ausrichtung des Drehkranzes steht der maximale Arbeitsbereich zur Verfügung. Außerdem ist eine horizontale Ausrichtung des Fahrzeuges aus Sicherheitsgründen und im Hinblick auf den Komfort für die Bedienperson erwünscht und verhilft zu erhöhter Standsicherheit auf Arbeitsgassen in Fallinien eines Hanges mit Seitenneigungen, die ein Abdriften herkömmlicher Maschinen an begrenzenden Baumreihen je nach Adhäsion Räder-Boden-Effekt bewirken und dadurch den Einsatz einschränken können. Mit der sensorgesteuerten Höhenführung der Tragelemente kann der Schwerpunkt der Maschine so weit über den Boden gesenkt werden, wie dieser ein behinderungsfreies Überrollen vorgibt. Soweit von der Arbeitstechnik erwünscht kann die Maschine bei den z.B. im Stand auszuführenden Kranarbeiten mit dem Mittelteil auf den Boden abgesenkt bzw. bei besonderer Anforderung auch seitlich geneigt werden, entgegen der im Bereich des rechten Winkels zur Längsachse einwirkenden Kraft, wie es z.B. bei dem auf 10m Länge ausgefahrenen Kran der Fall sein kann. Außerdem bieten die beweglichen Tragelemente ein höhengleiches Einziehen der Aufstandsflächen der Räder/Stollen zur Bodenplatte des Mittelteiles an, so daß die gesamten Einzugsgrößen ein Verladen auf Tieflader innerhalb der Straßenverkehrsordnung allgemein zulassen und die in der Regel verwendeten hydrostatischen Antriebsmotoren, die für längere Straßenfahrten nicht ausgelegt sind, geschont werden können. Motor und Flüssigkeitsbehälter können im Gelenkteil schwerpunktgünstig und mit geschützten Kurzverbindungen zu den hydraulischen Anlagen untergebracht sein, schwerpunkt- oder konstruktionsbedingt jedoch auch an anderen Positionen.

Bei einer bevorzugten Ausführungsform des erfindungsgemäßen Fahrgestells umfaßt jedes Tragelement eine Stollenwalze. Diese ist mit quer zur Fahrtrichtung verlaufender Drehachse an dem jeweiligen Teilfahrzeug aufgehängt; ihre - mit Stollen besetzte - Mantelfläche stellt die auf dem Boden abrollende Endlosfläche dar. Insbesondere bei größeren Fahrzeugen kann es jedoch zweckmäßig sein, pro Trageinheit zwei oder noch mehr Walzen oder Scheibenräder vorzusehen, welche parallel zueinander mit querverlaufender Drehachse am jeweiligen Rahmen aufgehängt sind. In diesem Fall wird die auf dem Boden abrollende Endlosfläche durch ein um die beiden Walzen jeder Trageinheit umlaufendes Stollenband dargestellt. Dieses besitzt beispielsweise einen von Gleisketten bekannten Aufbau mit einseitig aufgebauten Stollen. Das Stollenband kann dabei mittels einer Mehrzahl von Stützrollen gleichmäßig an den Boden angedrückt werden, wie dies von Gleiskettenfahrzeugen grundsätzlich bekannt ist.

Vorteilhafterweise ist mindestens eines der Tragelemente motorisch angetrieben; denn diese sind in besonderer Weise geeignet, beim Geländeeinsatz dem Fahrzeugantrieb zu dienen. Zum einen sind sie aufgrund ihres Stollenprofils in der Lage, die erforderlichen hohen Antriebskräfte zu übertragen; zum anderen ruht auf den Tragelementen beim Geländeeinsatz der Hauptanteil der Last des Fahrzeuges, so daß die Gefahr des Durchdrehens (Schlupf) erheblich geringer ist als beim Antrieb der Radeinheiten.

Besonders zweckmäßig ist es, wenn beide Tragelemente vom Antriebsmotor des Fahrzeuges angetrieben sind. Hierdurch läßt sich die Steigfähigkeit des Fahrzeuges weiter steigern. Der Montage von Ketten auf die Radeinheiten bedarf es auch bei einem weichen Boden in diesem Fall nicht. Zusätzlich ist es in dem Fall, daß beide Tragelemente angetrieben sind, möglich, das Fahrzeug zusätzlich mit einer Steuerung auszurüsten, welche beide Tragelemente in der Weise koordiniert, daß die Stollen des jeweils nachlaufenden Tragelements in die Eindrücke eingreifen, welche die Stollen des vorlaufenden Tragelements in den Boden eingeprägt haben. Eine derartige Koppelung der beiden Tragelemente trägt zu einer weiteren Verminderung der Bodenschädigung, d.h. zu einer weiter verbesserten Schonung des Bodens bei, indem der Flächenanteil des Bodens, der starken Belastungen ausgesetzt ist, minimal ist.

zweckmäßigerweise sind die Stollen auf den Tragelementen auswechselbar montiert. Hierdurch wird die Neubestückung der Tragelemente mit Stollen anderer Ausformung oder aufgrund Verschleißes erleichtert. Auf diese Weise läßt sich das Fahrzeug mit relativ geringem Aufwand an die örtlichen Bodenverhältnisse (trocken, feucht, gefroren, Stärke des Oberbodens) anpassen. Eine derartige Anpassung ist unter dem Gesichtspunkt einer maximalen Schonung des Bodens erwünscht. Ein typischer Stollen besitzt eine Aufstandsfläche von 20 x 40 cm; jedoch sind je nach Bodenverhältnissen andere Abmessungen zweckmäßig. Auch die Verteilung der Stollen auf der Walze bzw. dem umlaufenden Endlosband (in Reihe oder versetzt) richtet sich nach den örtlichen Gegebenheiten.

Bei einer anderen vorteilhaften Ausführungsform des erfindungsgemäßen Fahrgestells ist vorgesehen, daß die Stollenhöhe zumindest in dem Bereich des jeweiligen Tragelements, mit welchem dieses auf dem Boden aufsteht, veränderbar ist. Dies kann beispielsweise dadurch technisch realisiert werden, daß die Stollen in der umlaufenden Endlosfläche des jeweiligen Tragelements verschieblich gelagert sind, bei Verwendung einer Walze als Tragelement in radialer Richtung; die vom Boden abgewandten Enden der Stollen gleiten dabei auf einer Führungsfläche, deren Lage veränderlich ist, beispielsweise mittels zweier Hydraulikzylinder. Je nach der eingestellten Position der Führungsfläche ragen die Stollen mehr oder weniger weit aus der Endlos fläche des Tragelements hervor.

Auch ist es möglich, daß in der umlaufenden Endlosfläche des Tragelements längsverschieblich geführte Stollen durch eine entsprechend geformte Führungsfläche, auf der sie mit ihren inneren Endflächen gleiten, erst dann in eine aus der umlaufenden Endlosfläche hervorragende Stellung ausgefahren werden, wenn sie vollständig, vertikal auf dem Boden aufstehen. Hierdurch läßt sich ein Eindrehen der Stollen in den Oberboden verhindern.

Insbesondere bei fest auf der umlaufenden Endlosfläche vorgesehenen Stollen besitzen diese bevorzugt eine halbschalig gewölbte Vorderfläche. Hierdurch wird ein besonders bodenschonendes Ein- und Ausdrehen der Stollen in den bzw. aus dem Oberboden bei minimalem Bodenauswurf erreicht. Zusätzlich kann eine Einrichtung zum Befeuchten der Stollen vorgesehen sein; denn durch vorheriges Anfeuchten der Stollen gleiten diese besser in dem Oberboden, und die Menge des beim Ausdrehen der Stollen aus dem Oberboden aufgeworfenen Bodens wird verringert.

Die Stollen können in der umlaufenden Endlosfläche auch einfedernd gelagert sein. Rollt eine in dieser Weise ausgestaltete Trageinheit über einen großen Stein oder dgl., federt der entsprechende auf dem Stein aufstehende Stollen ein. Auf diese Weise wird erreicht, daß sämtliche auf dem Boden aufstehende Stollen gleichmäßig tragen; eine Überlastung einzelner Stollen wird dadurch sicher ausgeschlossen.

Durch das durch die Erfindung ermöglichte bodenschonende Aufbringen der Fahrzeuglast auf den Boden können mit erfindungsgemäßen Fahrgestellen ausgerüstete Fahrzeuge ohne nachteilige Folgen für den Boden sogar schwerer sein als herkömmliche Fahrzeuge. Insbesondere ist es möglich, ein Fahrzeug sowohl mit einer Holzernteeinrichtung, d.h. einem Harvesterkopf, als auch mit einer Holztransporteinrichtung, z.B. einem Zangen- oder Rungenaufbau, auszurüsten. Hierdurch wird hinwiederum ein zweifaches Befahren derselben Arbeitsgasse, wie es derzeit wegen der getrennten Funktionen der Fahrzeuge (Ernte- oder Transportfahrzeug) erforderlich ist, überflüssig. Indem somit ein zweites Befahren derselben Arbeitsgasse entfallen kann, wird deren Boden noch weitgehender geschont; denn gerade das wiederholte Befahren derselben Bodenbereiche hat sich als besonders schädlich herausgestellt.

Eine im Rahmen der Figurenbeschreibung näher erläuterte Weiterbildung des erfindungsgemäßen Fahrgestells sieht vor, daß die Hauptlasten direkt auf die Trageinheiten aufgebracht werden. Hierzu sind an den Schwingen der Tragwerke Stützbögen vorgesehen, auf welchen sich die Lasten abstützen. Ein als Holzvollernter ausgestaltetes Nutzfahrzeug mit einem derartigen Fahrgestell wird in seiner Längsachse gegliedert in vorderen Lastbereich mit Triebkopf und Kran, Vorder- und Hinterrahmen sowie hinteren Lastbereich mit Transportraum. Eine besondere Steifigkeit erhält das in dieser Weise ausgebildete Fahrgestell, indem weitere, an den Schwingen der Radeinheiten vorgesehene Stützbögen mit den Stützbögen der Trageinheiten über Bogenführungen verbunden sind, beispielsweise mittels Bogenführungen nach dem Nut-Feder-Prinzip. Auch eine unmittelbare Führung der einander benachbarten Schwingen der Radeinheiten und der Trageinheiten gegeneinander trägt zu einer derartigen Versteifung des Fahrgestells bei, indem die Seitenkräfte verteilt werden.

Zweckmaßigerwise ist eine Sperrvorrichtung vorgesehen, welche beim Fahren auf Wegen die angehobenen Trageinheiten am Vorder-bzw. Hinterrahmen arretiert. Eine derartige Sperrvorrichtung, beispielsweise in Form einer im Rahmen gelagerten Sperrklinke, kann auch der Aretierung weiterer Teile dienen, wie z.B. des Triebkopfes.

Im folgenden werden Ausführungsbeispiele der Erfindung anhand der Zeichnung näher erläutert. Es zeigt
Fig. 1 ein erfindungsgemäßes Nutzfahrzeug-Fahrgestell in einer Seitenansicht (rechts) und Längsschnitt (links) kombinierenden Darstellung
Fig. 2 eine Ansicht auf das Fahrgestell gemäß Fig. 1 von unten,
Fig. 3 eine Abwandlung des Fahrgestells gemäß Fig. 1,
Fig. 4 eine bevorzugte Ausgestaltung der Stollen und
Fig. 5 eine bevorzugte Ausgestaltung eines Tragelements.

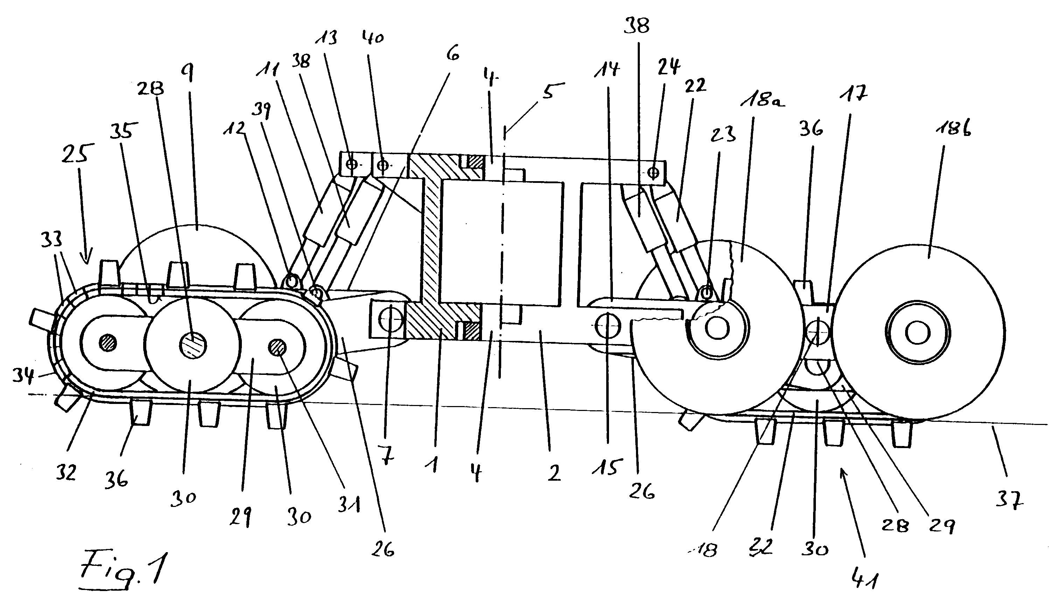

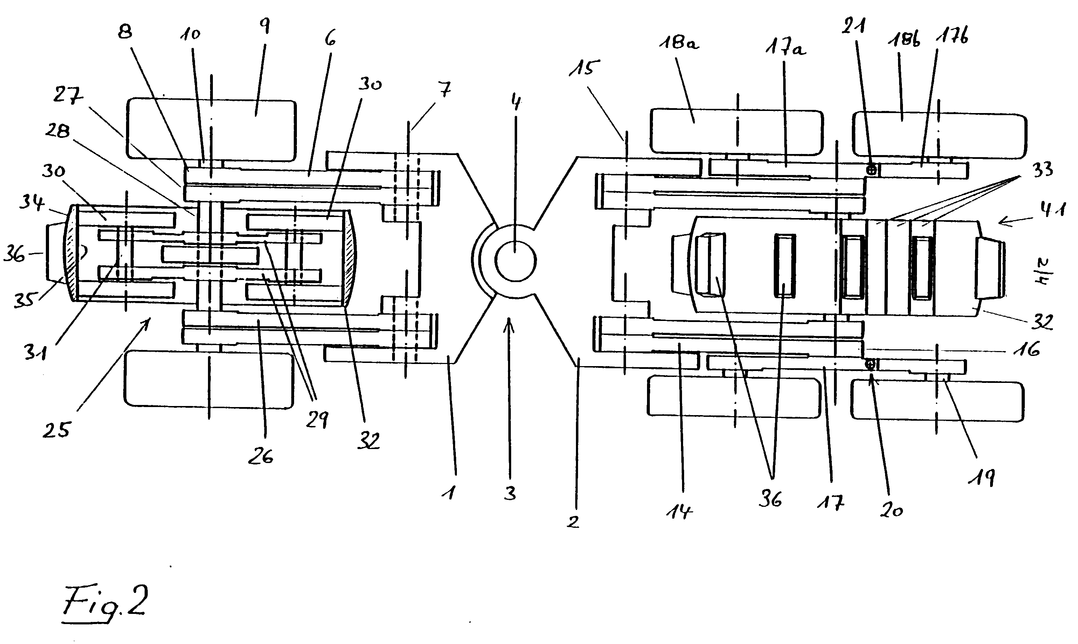

Das Fahrgestell gemäß den Fig. 1 und 2 weist einen Vorderrahmen 1, auf welchem ein Vorderfahrzeug aufgebaut werden kann, und einen Hinterrahmen 2, auf welchem ein Hinterfahrzeug aufgebaut werden kann, auf. Beide Rahmen sind zur Bildung eines herkömmlichen Knickgelenks 3 über zwei gemeinsame Schwenkbolzen 4 mit vertikaler Achse 5 miteinander verbunden.

Am Vorderrahmen 1 sind zwei Vorderradschwingen 6 um die horizontale Achse 7 schwenkbar angelenkt; an ihren freien Enden 8 ist jeweils ein Vorderrad 9 auf einer Radachse 10 gelagert. Jede Vorderradschwinge 6 ist über einen doppeltwirkenden Hydraulikzylinder 11, welcher schwingenseitig am Anlenkpunkt 12 und rahmenseitig am Anlenkpunkt 13 angeschlagen ist, am Vorderrahmen 1 abgestützt. Mittels der Hydraulikzylinder 11 kann jede Vorderradschwinge 6 unabhängig von der anderen um die Achse 7 schwenkend angehoben und abgesenkt werden.

Am Hinterrahmen 2 sind zwei Hinterradschwingen 14 um die horizontale Achse 15 schwenkbar angelenkt. An den freien Enden 16 der Hinterradschwingen 14 ist jeweils eine Hinterradtraverse 17 um die horizontale Achse 18 schwenkbar angeschlagen. An den Enden jeder Hinterradtraverse 17 ist je ein Hinterrad 18a, 18b auf einer Radachse 19 gelagert. Jede Hinterradtraverse 17 ist in zwei Abschnitte 17a, 17b unterteilt, welche gelenkig miteinander verbunden sind; das Gelenk 20 besitzt dabei eine vertikale Schwenkachse, die durch einen beide Abschnitte der Hinterradtraverse durchdringenden Bolzen 21 gebildet wird. Bei Kurvenfahrt werden die hinteren Abschnitte 17b der Hinterradtraversen gegenüber den vorderen Abschnitten 17a in der Weise verschwenkt, daß die Achsen der Vorderräder 9, der vorderen Hinterräder 18a und der hinteren Hinterräder einander in einem Punkt schneiden, wodurch ein Radieren der Räder vermieden wird. Jede Hinterradschwinge 14 ist über einen doppeltwirkenden Hydraulikzylinder 22, welcher schwingenseitig am Anlenkpunkt 23 und rahmenseitig am Anlenkpunkt 24 angeschlagen ist, am Hinterrahmen 2 abgestützt. Mittels der Hydraulikzylinder 22 kann jede Hinterradschwinge 14 unabhängig von der anderen um die Achse 15 schwenkend angehoben und abgesenkt werden.

An dem Vorderrahmen 1 sind, um die gleiche horizontale Achse 7 wie die Vorderradschwingen 6 schwenkbar, zwischen diesen zwei der vorderen Trageinheit 25 zugeordnete vordere Tragschwingen 26 angelenkt. Zwischen ihren freien Enden 27 erstreckt sich die vordere Tragachse 28, die mit den vorderen Tragschwingen 26 fest verbunden ist. Auf der vorderen Tragachse 28 sind zwei vordere Stützradtraversen 29 und zwischen diesen ein Stützrad 30 schwenkbar gelagert. Je ein weiteres Stützrad 30 ist an jedem Ende jeder vorderen Stützradtraverse 29 gelagert, wozu beide vorderen Stützradtraversen endseitig mittels je einer Stützradachse 31 verbunden sind, auf welchen sich die entsprechenden Stützräder 30 drehen. Die vordere Trageinheit umfaßt somit insgesamt fünf Stützräder 30.

Um die Stützräder herum läuft eine Endlos-Gliederkette 32. Deren Glieder 33 besitzen eine konkav gewölbte Außenfläche 34 und eine plane Innenfläche 35, auf welcher die Stützräder 30 abrollen. Ein Teil der Glieder 33 der Endlosgliederkette 32 trägt je einen von der Außenfläche 34 vorspringenden Stollen 36. Die mit Stollen besetzten Glieder sind dabei innerhalb der Kette 32 so verteilt, daß diese in regelmäßigen Abständen mit Stollen 36 bestückt ist.

Jede vordere Tragschwinge 26 ist über einen doppeltwirkenden Hydraulikzylinder 38, welcher schwingenseitig am Anlenkpunkt 39 und rahmenseitig am Anlenkpunkt 40 angeschlagen ist, am Vorderrahmen 1 abgestützt. Mittels der beiden miteinander gekoppelten Hydraulikzylinder 38 können die beiden vorderen Tragschwingen 26 gemeinsam, jedoch unabhängig von den Vorderradschwingen 6 um die Achse 7 schwenkend angehoben und abgesenkt werden. Die Hubeinrichtung für die vordere Trageinheit umfaßt somit die beiden vorderen Tragschwingen 26 sowie die zugeordneten Hydraulikzylinder 38.

An dem Hinterrahmen 2 ist eine hintere Trageinheit 41 angeordnet. Ihr Aufbau entspricht demjenigen der vorstehend beschriebenen, am Vorderrahmen 1 angeordneten vorderen Trageinheit 25; auf die vorstehenden Erläuterungen wird zur Vermeidung von Wiederholungen verwiesen. Auch die Art der Anlenkung der hinteren Trageinheit 41 an dem Hinterrahmen 2 entspricht der mit Bezug auf die vordere Trageinheit 25 beschriebenen; auch insoweit wird auf die vorstehenden Erläuterungen verwiesen.

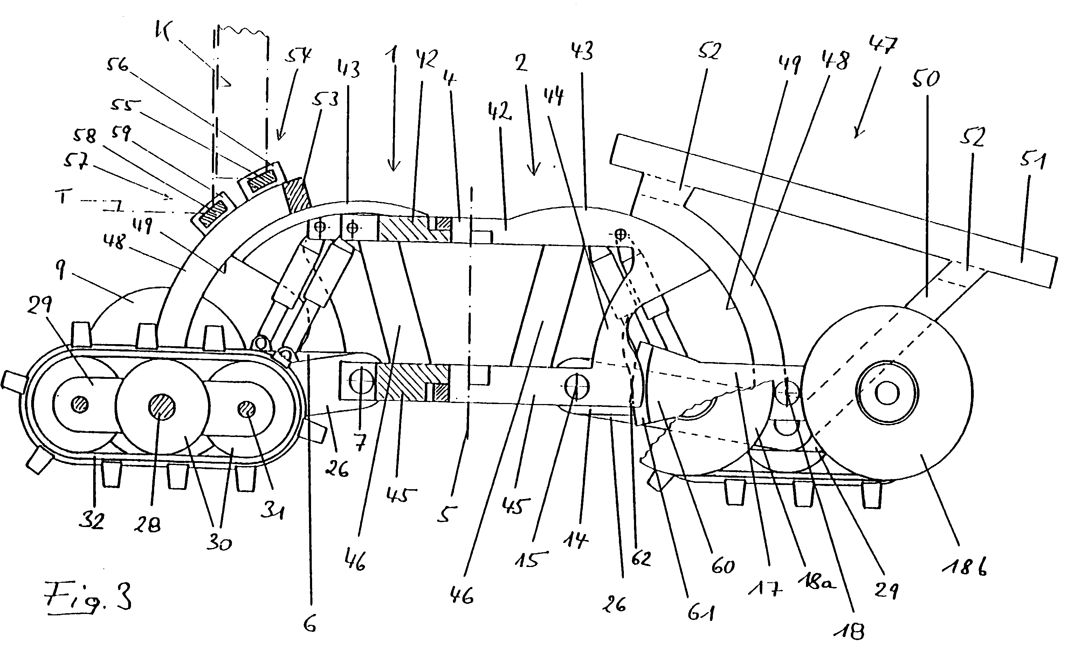

Das in Fig.3 dargestellte Fahrgestell unterscheidet sich von demjenigen gemäß Fig.1 insbesondere durch einen modifizierten Aufbau der Teile, die der Abstützung der Lasten dienen. Hierzu gehen die beiden oberen Tragholme 42 des Hinterrahmens 2 in je einen hinteren Tragbogen 43 über, deren Krümungsmittelpunkte auf der Achse 15 liegen, um die die Hinterradschwingen 14 und die hinteren Tragschwingen 26 verschwenkbar sind. Die hinteren Tragbögen 43 stützen sich über je einen Strebebogen 44 auf den unteren Tragholmen 45 des Hinterrahmens 2 ab. Die oberen Tragholme 42 und die unteren Tragholme 45 des Hinterrahmens sind ferner mittels der beiden Streben 46 gegeneinander versteift.

Die hintern Tragschwingen 26 bilden bei der in Fig.3 dargestellten Ausführungsform des Fahrgestells einen integrierten Bestandteil eines Transportaufbaus 47. Hierzu sind an den hinteren Tragschwingen im Bereich ihrer freien Enden, benachbart der hinteren Tragachse je ein Stützbogen 48 vorgesehen, welche sich von je einer Tragschwinge nach oben erstrecken. Diese Stützbögen stützen sich in jeder Stellung der hinteren Trageinheit auf den Tragbögen 43 des Hinterrahmens ab, wozu an ihnen Gleitflächen 49 vorgesehen sind, deren Krümmungsachse mit der Schwenkachse 15 der hinteren Tragschwingen zusammenfällt. Im Bereich der aufeinander gleitenden, zusammenwirkenden Flächen der Tragbögen und der zugeordneten Stützbögen sind - nicht dargestellte - Führungen vorgesehen, welche einen seitlichen Versatz der einander zugeordneten Trag- und Stützbögen gegeneinander verhindern. Desweiteren umfaßt der Transportaufbau 47 zwei schräg nach oben gerichtete Stützstreben 50, in welche die hinteren Tragschwingen übergehen. Auf die beiden Stützbögen 48 und Stützstreben 50 ist ein Transportrahmen aufgesetzt, welcher zwei Längsträger 51 und zwei Querträger 52 umfaßt; die beiden Längsträger verbinden dabei je einen Stützbogen 48 und eine Stützstrebe 50 miteinander, während ein Querträger die beiden Stützbögen und der andere Querträger die beiden Stützstreben miteinander verbindet.

Auf diese Weise entsteht ein starrer, verwindungssteifer Transportaufbau, der unmittelbar mit der hinteren Trageinheit gekoppelt ist. Die Last von auf dem Transportaufbau gelagertem Gut wird somit direkt über die Trageinheit auf den Boden aufgebracht, ohne im Fahrgestell innere Kräfte zu verursachen. Das Fahrgestell kann hierdurch leichter aufgebaut sein, was zu einer weiteren Schonung des Bodens beiträgt.

Auch beim Vorderrahmen 1 gehen die beiden oberen Tragholme 42 in je einen Tragbogen 43 über, deren Krümmungsachsen mit der Schwenkachse der Vorderradschwingen und der vorderen Tragschwingen zusammenfallen und die sich über je einen Strebebogen auf den entsprechenden unteren Tragholmen 45 abstützen. Die Breite der Tragbögen ist dabei - wie auch im Falle des Hinterrahmens - derart, daß sie sowohl die Radschwingen als auch die Tragschwingen überdecken. Und auch der Vorderrahmen ist durch zwei die oberen und die unteren Tragholme verbindende Streben 46 versteift.

An den vorderen Tragschwingen ist - wie für die hinteren Tragschwingen erläutert - nach oben verlaufend je ein Stützbogen 48 angeordnet. Die Stützbögen liegen mit ihren Gleitflächen 49 auf den oberen Tragbögen des Vorderrahmens auf. Die beiden vorderen Stützbögen sind an ihren freien Enden mittels eines Verbindungsholmes 53 miteinander verbunden und gegeneinander versteift. Auch an den dem Vorderrahmen zugeordneten Stütz- und Tragbögen sind im Bereich der jeweils zusammenwirkenden Flächen - nicht dargestellte - Führungen vorgesehen, welche ein seitliches Versetzen der einander zugeordneten Bögen gegeneinander verhindern.

Auf den beiden Stützbögen ruht eine erste Lastbrücke 54, welche einen Querträger 55 und zwei hieran endseitig angeordnete, auf den Stützbögen geführte Führungsstücke 56 umfaßt. Die Last von sich auf der ersten Lastbrücke abstützenden Aggregaten des Nutzfahrzeuges wird über die Stützbögen unmittelbar auf das vordere Tragwerk geleitet; wie im Falle des Hinterrahmens findet eine innere Beanspruchung des Fahrgestells nicht statt. Im Falle eines forstwirtschaftlich einsetzbaren Holzvollernters mit dem erfindungsgemäßen Fahrgestell stützt sich der am Vorderfahrzeug vorgesehene Kran K auf der ersten Lastbrücke ab, wobei zum Ausgleich der im Einsatz vorkommenden Längs- und Querneigungen zweckmäßigerweise zwischen dem Kran und der ersten Lastbrücke ein Kardangelenk vorgesehen ist.

An den Vorderradschwingen 6 des in Fig.3 dargestellten Fahrgestells sind ebenfalls - nicht sichtbare - Stützbögen vorgesehen, welche auf den Tragbögen 43 des Vorderrahmens geführt sind. Auf ihnen stützt sich eine zweite Lastbrücke 57 ab, die einen Querträger 58 und zwei hieran endseitig angeordnete, auf den äußeren Stützbögen geführte Führungsstücke 59 umfaßt. Im Falle eines mit dem erfindungsgemäßen Fahrgestell ausgerüsteten Holzvollernters ist an dieser zweiten Lastbrücke der Triebkopf T aufgehängt, der auf diese Weise, auf den den Radschwingen zugeordneten Stützbögen gleitend, höhenverstellbar ist. Diese Höhenverstellbarkeit des Triebkopfes erleichtert die Handhabung des Holzvollernters und verbessert die Sicht auf die Arbeitgassen im Wald.

Eine weitere Abwandlung des in Fig.3 dargestellten Fahrgestells gegenüber demjenigen gemäß den Fig. 1 und 2 betrifft die Hinterradtraverse. Zu deren Stabilisierung, insbesondere bei Rückwärtsfahrt, wenn die Gelenke 20 der Hinterradtraversen 17 (Fig.2) gesperrt sind, ist vorne an den Hinterradtraversen je ein Führungsschild 60 vorgesehen. Jedes Führungsschild greift mit einem Steg 61 in je eine Führungsnut 62 ein, welche an den unteren Tragholmen 45 und an den Strebebögen 44 des Hinterrahmens vorgesehen sind. Hierdurch werden die Hinterradtraversen zweiseitig exakt geführt.

Im übrigen entspricht das Fahrgestell gemäß Fig.3 der in den Fig. 1 und 2 dargestellten Ausführungsform; es wird daher zur Vermeidung von Wiederholungen auf die entsprechenden, die Figuren erläuternden Ausführungen verwiesen.

Das in Fig.4 in Seitenansicht dargestellte Tragelement umfaßt eine Stollenwalze 63, welche an den Tragschwingen 26 drehbar gelagert ist. Die Umfangsfläche der Stollenwalze ist mit Stollen besetzt, die eine ebene Aufstandsfläche 64 und eine halbschalig gekrümmte Vorderfläche 65 besitzen; die "Vorderfläche" in diesem Sinne ist diejenige Fläche des Stollens, die bei Vorwärtsfahrt (Pfeil F) zuerst in Bodenkontakt kommt. Die Stollen sind aus einem I-Träger 66 aufgebaut, auf den die halbschalige Vorderfläche 65, die ebene Aufstandsfläche 64 sowie zwei Seitenflächen angeschweißt sind. Die Hinterfläche der Stollen ist offen. In Fig.4 sind von den Stollen nur zwei dargestellt.

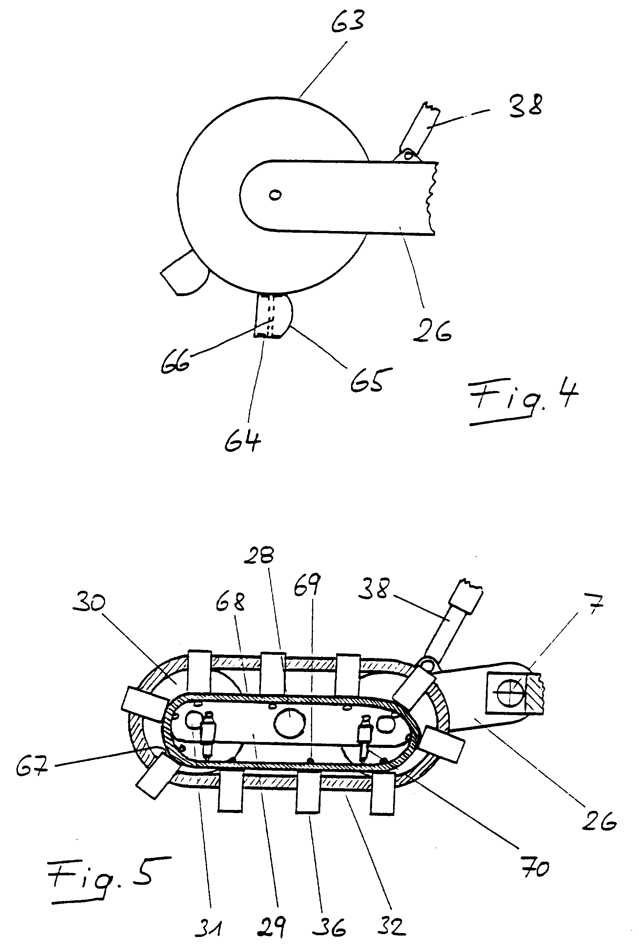

Das in Fig.5 im Längsschnitt dargestellte Tragelement ist mit Stollen ausgerüstet, deren Eindringtiefe in den Boden einstellbar ist. Hierzu sind die Stollen 36 in der Endlos-Gliederkette 32 in Stollen-Längsrichtung verschieblich geführt. Sie sind so schmal ausgeführt, daß sie zwischen den beiden Stützradtraversen 29 Platz finden. Mit ihren inneren Stirnflächen 67 gleiten die Stollen 36 auf einer geschlossenen Führungsschiene 68. Mittels die Führungsschiene beidseitig umgreifender Klammern 69 ist dabei jeder Stollen auf der Führungsschiene zwangsgeführt. An jeder Stützradtraverse sind endseitig zwei Stützräder 30 gelagert; ein mittiges Stützrad ist - anders als dies für das Tragelement gemäß Fig.1 zutrifft - nicht vorgesehen. Die Führungsschiene ist mittels der beiden Hydraulikzylinder 70, die sich an den Stützradtraversen abstützen, vertikal verschiebbar. Durch Verschieben der Führungsschiene 68 nach oben wird die Eindringtiefe der Stollen 36 in den Boden verringert und umgekehrt.

## Patentansprüche

1. Fahrgestell für Nutzfahrzeug, insbesondere für land- und forstwirtschaftliche Zwecke, umfassend einen Vorderrahmen (1) und einen mit diesem über ein Gelenk (3) mit vertikaler Schwenkachse (5) verbundenen Hinterrahmen (2), wobei am Vorderrahmen und am Hinterrahmen seitlich jeweils zwei unabhängig voneinander anheb- und absenkbare Radeinheiten (6,9,10,11;14,17,18,19,22) und im wesentlichen mittig jeweils eine Trageinheit (25,41) vorgesehen sind, wobei die Trageinheiten Tragelemente (28-36) umfassen, die jeweils über eine mit Stollen (36) besetzte Endlosfläche verfügen,
dadurch gekennzeichnet,
daß jede Trageinheit eine Hubeinrichtung (26,38), mittels derer das jeweilige Tragelement anheb- und in eine Stellung, in der die Endlosfläche auf dem Boden abrollt, absenkbar ist, umfaßt, wobei die Hubeinrichtungen so dimensioniert sind, daß sie zusammen mindestens die Hälfte des Gesamtgewichts des Fahrzeuges zu tragen vermögen.

2. Fahrgestell nach Anspruch 1,
dadurch gekennzeichnet,
daß jedes Tragelement eine Stollenwalze (63) umfaßt.

3. Fahrgestell nach Anspruch 1,
dadurch gekennzeichnet,
daß jedes Tragelement mindestens zwei Walzen oder Räder (30) mit einem umlaufenden Stollenband (32,33,36) umfaßt.

4. Fahrgestell nach Anspruch 1,
dadurch gekennzeichnet,
daß zwei Lagesensoren zur Erfassung der Quer- und der Längsneigung des Fahrgestells vorgesehen sind, welche mit einer Lageregelung verbunden sind, welche die Hubeinrichtungen der Radeinheiten und der Trageinheiten in der Weise steuert, daß das Fahrgestell eine horizontale Lage beibehält.

5. Fahrgestell nach Anspruch 1,
dadurch gekennzeichnet,
daß mindestens ein Tragelement motorisch angetrieben ist.

6. Fahrgestell nach Anspruch 5,
dadurch gekennzeichnet,
daß beide Tragelemente motorisch angetrieben und so miteinander gekoppelt sind, daß die Stollen (36) beider Tragelemente beim bewegten Fahrzeug nacheinander an denselben Aufstandpunkten den Boden berühren.

7. Fahrgestell nach Anspruch 1,
dadurch gekennzeichnet,
daß die Stollen (36) an den Tragelementen auswechselbar montiert sind.

8. Fahrgestell nach Anspruch 1,
dadurch gekennzeichnet,
daß die Stollenhöhe zumindest in den Bereichen der Tragelemente, mit denen diese auf dem Boden aufstehen, veränderbar ist.

9. Fahrgestell nach Anspruch 1,
dadurch gekennzeichnet,
daß am Heck des Hinterrahmens eine Bodenauflockerungsvorrichtung vorgesehen ist, deren Arbeitsbreite im wesentlichen der Breite der Tragelemente entspricht.

10. Fahrgestell nach Anspruch 1,
dadurch gekennzeichnet,
daß die Radeinheiten Boggieachsen aufweisen mit Rädern unterschiedlicher Radien.

11. Fahrgestell nach Anspruch 1,
dadurch gekennzeichnet,
daß auf dem Vorderrahmen (1) ein als Triebkopf (T) ausgebildetes Vorderfahrzeug aufgebaut ist.

12. Fahrgestell nach Anspruch 11,
dadurch gekennzeichnet,
daß der Triebkopf (T) eigenbeweglich auf Stützbögen (48), welche mit den Radschwingen (6) oder den Tragwerksschwingen (26) des Vorderrahmens (1) verbunden sind, geführt wird.

13. Fahrgestell nach Anspruch 11,
dadurch gekennzeichnet,
daß das Vorderfahrzeug (1) einen Ausleger (K) mit einem Harvesterkopf aufweist und daß auf dem Hinterrahmen (2) ein über eine Holztransporteinrichtung (47) verfügendes Hinterfahrzeug aufgebaut ist, wobei die Last der Nutzeinrichtungen direkt auf die Trageinheiten (25,41) geführt wird.

14. Fahrgestell nach Anspruch 13,
dadurch gekennzeichnet,
daß sich der Ausleger (K) auf einer Lastbrücke (54) abstützt, welche auf Stützbögen (48) geführt ist, die an den vorderen Tragwerksschwingen (26) angeordnet sind.

15. Fahrgestell nach Anspruch 1,
dadurch gekennzeichnet,
daß zumindest die oberen Tragholme (42) des Vorder- oder des Hinterrahmens (1;2) in Tragbögen (43) übergehen, deren Krümmungsachsen mit der Schwenkachse (7;15) der Tragwerksschwingen (26) des zugeordneten Tragwerks (25;41) zusammenfallen, und daß mit den Tragwerksschwingen (26) des zugeordneten Tragwerks Stützbögen (48) verbunden sind, die sich auf den Tragbögen (43) abstützen.

16. Fahrgestell nach Anspruch 10,
dadurch gekennzeichnet,
daß die vorderen Enden der Hinterradtraversen (17) Führungsschilde (60) mit Stegen (61) aufweisen und daß am Hinterrahmen Führungsnuten (62) zur führenden Aufnahme der Stege vorgesehen sind.

## Claims

1. Chassis for a utility vehicle, especially for agricultural and forestry uses, encompassing a front frame (1) and a rear frame (2) joined to the former by articulation (3) with vertical swiveling axle (5), whereby two unconnected raising and lowering wheel units (6,9,10,11,14,17,18,19,22) are provided at the sides of the front and rear frames and an essentially centered support unit (25,41) is provided in each case, while these support units encompass support elements (28-36), each of which has a continuous surface equipped with cleats (36), characterized by the fact that each support unit encompasses a lift device (26,38), by means of which the associated support element can be both lowered and raised into a posztion, in which the continuous surface rolls on the ground, while the two lift devices are so dimensioned that they can together bear at least half of the total weight of the vehicle.

2. Chassis according to Claim 1, characterized by the fact that each support element encompasses a cleated roller (63).

3. Chassis according to Claim 1, characterized by the fact that each support element encompasses at least two rollers or wheels (30) with an encircling cleated track (32,33,36).

4. Chassis according to Claim 1, characterized by the fact that two position sensors are provided for detecting the transverse and the longitudinal cant of the chassis, which are connected with a position regulator, which controls the lift devices of the wheel units in such a way that the chassis is maintained in a horizontal position.

5. Chassis according to Claim 1, characterized by the fact that at least one bearing component is driven via a motor.

6. Chassis according to Claim 5, characterized by the fact that both bearing components are driven via a motor and coupled with each other in such a way that the cleats (36) of both bearing components consecutively penetrate into the identical depressions in the soil while the vehicle is in motion.

7. Chassis according to Claim 1, characterized by the fact that the cleats (36) are arranged on the bearing components in an exchangeable fashion.

8. Chassis according to Claim 1, characterized by the fact that the height of the cleats may be adjusted, namely at least within the regions of the bearing components with which the cleats contact the ground.

9. Chassis according to Claim 1, characterized by the fact that the rear of the rear frame is provided with a soil loosening device, the operating width of which essentially corresponds with the width of the bearing components.

10. Chassis according to Claim 1, characterized by the fact that the wheel units are provided with bogie axles with wheels of different radii.

11. Chassis according to Claim 1, characterized by the fact that a front vehicle which is designed as the driving unit (T) is arranged on the front frame (1).

12. Chassis according to Claim 11, characterized by the fact that the driving unit (T) is guided such that it may be moved independently on support arches (48) which are connected with the wheel swing arms (6) or the bearing swing arms (26) of the front frame (1).

13. Chassis according to Claim 11, characterized by the fact that the front vehicle (1) is provided with a crane (K) having a harvester accessory, and that a rear vehicle which is provided with a timber transport device (47) is arranged on the rear frame (2), whereby the load of both utility devices is transferred directly onto the bearing components (25,41).

14. Chassis according to Claim 13, characterized by the fact that the crane (K) braces itself on a load bridge (54) which is guided on support arches (48) that are arranged on the front bearing swing arms (26).

15. Chassis according to Claim 1, characterized by the fact that at least the upper bearing crossbeams (4Z) of the front or the rear frame (1;2) merge into bearing arches (43), the axes of curvature of which coincide with the pivoting axis (7;15) of the bearing swing arms (26) of the corresponding bearing unit (25,41), and that support arches (48) which rest on the bearing arches (43) are connected with the bearing unit swing arms (26) of the corresponding bearing units.

16. Chassis according to Claim 10, characterized by the fact that the front ends of the rear wheel tie bars (17) are provided with guide plates (60) having webs (61), and that guide grooves (62) which accommodate and guide the webs are provided on the rear frame.

## Revendications

1. Châssis pour véhicule utilitaire, notamment à usage agricole et forestier, comprenant un cadre avant (1) et un cadre arrière (2) relié au cadre avant par l'intermédiaire d'une articulation (3) possédant un axe vertical de pivotement (5), et dans lequel respectivement deux unités à roues (6,9,10,11; 14,17,18,19,22), pouvant être soulevées et abaissées indépendamment l'une de l'autre, sont prévues latéralement sur le cadre avant et sur le cadre arrière, tandis que respectivement une unité de support (25,41) est prévue essentiellement au centre, les unités de support comprenant des éléments de support (28-36) qui possèdent respectivement une surface sans fin garnie de barrettes (36), caractérisé en ce que chaque unité de support comprend un dispositif de levage (26,38), au moyen duquel l'élément respectif de support peut être soulevé et être abaissé dans une position, dans laquelle la surface sans fin roule sur le sol, les dispositifs de levage étant dimensionnés de telle sorte, qu'ensemble, ils peuvent supporter au moins la moitié du poids total du véhicule.

2. Châssis selon la revendication 1, caractérisé en ce que chaque élément de support comprend un rouleau à barrettes (63).

3. Châssis selon la revendication 1, caractérisé en ce que chaque élément de support comporte au moins deux rouleaux ou roues (30) possédant une bande circulante (32,33,36) pourvue de barrettes.

4. Châssis selon la revendication 1, caractérisé en ce que deux capteurs de position sont prévus pour détecter l'inclinaison transversale et l'inclinaison longitudinale du châssis, ces capteurs étant reliés à une unité de régulation de position qui commande les dispositifs de levage des ensembles de roues et des unités de support, de manière que le châssis conserve une position horizontale.

5. Châssis selon la revendication 1, caractérisé en ce qu'au moins un élément de support est entraîné par un moteur.

6. Châssis selon la revendication 5, caractérisé en ce que les deux éléments de support sont entraînés par un moteur et sont accouplés entre eux, de telle sorte que les barrettes (36) des deux éléments de support viennent en contact successivement avec le sol au niveau des mêmes points d'appui, lorsque le véhicule se déplace.

7. Châssis selon la revendication 1, caractérisé en ce que les barrettes (36) sont montées de manière à être remplaçables sur les éléments de support.

8. Châssis selon la revendication 1, caractérisé en ce que la hauteur des barrettes peut être modifiée au moins dans les parties des éléments de support, avec lesquelles ces derniers s'appliquent sur le sol.

9. Châssis selon la revendication 1, caractérisé en ce que, sur l'arrière du cadre arrière, est prévu un dispositif d'ameublissement du sol, dont la largeur de travail correspond pour l'essentiel à la largeur des éléments de support.

10. Châssis selon la revendication 1, caractérisé en ce que les unités à roues comportent des essieux de boggie pourvus de roues possédant des rayons différents.

11. Châssis selon la revendication 1, caractérisé en ce qu'un véhicule avant, agencé sous la forme d'un véhicule moteur (T), est monté sur le cadre avant (1).

12. Châssis selon la revendication 11, caractérisé en ce que le véhicule moteur (T) est guidé, de manière à se déplacer de façon autonome, sur des arcs d'appui (48), qui sont reliés aux bras oscillants de roue (6) ou au bras oscillants (26) de la structure de support du cadre avant (1).

13. Châssis selon la revendication 1, caractérisé en ce que le véhicule avant (1) possède un bras en console (K) comportant une tête de moissonneuse et que, sur le cadre arrière (2), est monté un véhicule arrière qui comporte un dispositif (47) de transport de bois, la charge des dispositifs utilitaires transmise directement aux unités de support (25,41).

14. Châssis selon la revendication 13, caractérisé en ce que le bras en console (K) prend appui sur un étrier de charge (54), qui est guidé sur des arcs d'appui (48) qui sont disposés sur les bras oscillants (26) de la structure de support.

15. Châssis selon la revendication 1, caractérisé en ce qu'au moins les longerons supérieurs (42) du cadre avant ou du cadre arrière (1;2) se prolongent par des arcs d'appui (43), dont les axes de courbure coïncident avec les axes de pivotement (7;15) des bras oscillants (26) de la structure de support associée (25;41), et qu'aux bras oscillants (26) de la structure de support associée sont reliés des arcs d'appui (48) qui prennent sur les arcs d'appui (43).

16. Châssis selon la revendication 10, caractérisé en ce que les extrémités avant des traverses de roues arrière (17) comportent des boucliers de guidage (60) possédant des barrettes (61) et que des rainures de guidage (62), servant à recevoir les barrettes en les guidant, sont prévues sur le cadre arrière.
